# EUROPÄISCHE PATENTSCHRIFT

(11) **EP 3 141 424 B1**
(45) Veröffentlichungstag und Bekanntmachung des Hinweises auf die Patenterteilung: **19.01.2022**
(21) Anmeldenummer: 16001800.8
(22) Anmeldetag: 16.08.2016
(51) Int. Cl.: B60P 7/135, B60P 7/08

(54) **LADUNGSSICHERUNG UND TRANSPORTFAHRZEUG**
LOAD SECURING AND TRANSPORT VEHICLE
SECURISATION DE CHARGEMENT ET VEHICULE DE TRANSPORT

(30) Priorität: 17.08.2015 DE 102015010486
(43) Veröffentlichungstag der Anmeldung: 15.03.2017
(73) Patentinhaber: Dominik, Uwe, 49086 Osnabrück (DE)
(72) Erfinder: Dominik, Uwe, 49086 Osnabrück (DE)
(74) Vertreter: Busse, Harald F.W.

(56) Entgegenhaltungen:
- DE-A1- 10 250 463
- DE-A1-102008 011 704
- DE-A1-102012 011 658
- DE-C1- 19 852 961
- US-A- 3 102 648
- US-A- 5 154 556
- US-A1- 2006 078 398
- US-B1- 8 950 989

## Beschreibung

Die Erfindung betrifft eine Ladungssicherungseinrichtung nach dem Oberbegriff des Anspruchs 1 sowie ein Transportfahrzeug.

Es ist bekannt, in Transportfahrzeugen, insbesondere straßenfahrenden Transportfahrzeugen, die Ladung über ein Verspannen mittels Gurten zu sichern. Dabei wird die Ladung häufig auf Paletten gehalten, so daß ein Verspannen mit übergreifenden Gurten nach unten hin, etwa zu längs seitlich im Fahrzeug befindlichen Lochschienen, einfach möglich ist.

Wenn die Ladung den Laderaum bis zur vorderen Stirnwand ausfüllt, kann auch ein Verspannen mit einer Komponente nach vorne möglich sein, etwa indem die Gurte die Ladung heckseitig hintergreifen.

Es sind jedoch als Ladung u. a. rollbare sog. CC-Container oder EC-Container für insbesondere Pflanzen bekannt, die nur eine stabile Bodenfläche dicht oberhalb ihrer Rollen und darüber nur, einzelne, leicht deformierbare Eckstäbe aufweisen. Derartige nach oben offene Container können nicht über ihre offene Beladung nach unten verspannt werden. Ein heckseitiges Verspannen birgt die Gefahr, daß durch dort angezogene Gurte die Stäbe deformiert und damit die Container beschädigt werden. Bei mehreren übereinander gestapelten Containern dieser Art können dann bei Deformation der unteren die oberen Lagen zudem herunterfallen. Daher ist es heute üblich, bei derartigen Containern auf eine Ladungssicherung zu verzichten, was insbesondere bei einem Anfahren an eine Rampe mit geöffneten LKW-Türen oder einer geöffneten hinteren Plane häufig zu Ladungsverlust und - beschädigung führt. Die Probleme verschärfen sich noch bei einer Teilbeladung eines solchen LKW.

Die DE 198 52 961 C1 zeigt eine Unterteilungs- und Befestigungsvorrichtung für Ladegut, insbesondere in Kraftfahrzeugen, genauer in Kofferräumen von PKW, wobei der Laderaumboden zur Halterung von aufragenden Pfosten dieser Vorrichtung zwei fest eingebaute Führungsschienen aufweist, die an sich schon Zusatzaufwand bedeuten. Die Pfosten bilden aufragende Führungselemente aus und verbinden starre Quer- und Längsmodule miteinander, die den Kofferraum in einzelne Fächer einteilen. Eine Festlegung von Gurten an den Pfosten ist nicht vorgesehen und mangels entsprechender Ösen oder ähnlicher Einrichtungen zum Vermeiden eines Abrutschens der Gurte auch nicht möglich.

Die DE 10 2012 011 658 A1 zeigt eine nach Art einer mit Regalen versehenen Box ausgebildete Ladeguttransportanordnung. Diese weist einen Stützkörper nach Art einer rechteckigen Bodenplatte auf, in deren vier Eckbereichen Stützträger angeordnet werden können, die in Einsatzstellung mehrere unterschiedliche Höhenabstützungen für Paletten aufweisen, so daß diese fluchtend übereinander als Stapel gehalten werden können. Eine Ladungssicherung in einem LKW oder ähnlichem Laderaum ist damit jedoch nicht gebildet, da auch hier keine Anbringmöglichkeit für Gurte gebildet ist und da auch eine randseitige Sicherung (zum Beispiel vorder- oder rückseitig) einer im Laderaum gehaltenen Ladung damit nicht möglich ist, sondern die so gebildeten Palettenträger bei Anordnung in beispielsweise einem LKW-Laderaum selbst eine Ladungssicherung benötigen würden.

Die US 5 154 556 A zeigt große, halboffene Eckboxen aus eine Vielzahl von vertikalen Stützen und oberen und unteren horizontalen Rahmenteilen. Diese ganze Eckbox ist an Wand und/oder Boden des LKW zu fixieren, da sie ansonsten keinerlei Sicherung für die gehaltenen Gasflaschen bieten würde.

Die US 8 950 989 B1 zeigt eine Ladungssicherung mit Hilfe von "Rods", die jedoch nicht aufstellbar sind, da sie oberseitig und unterseitig mit gerundeten Endstücken versehen und daher nicht selbstständig stehfähig sind. Die "Rods" dienen damit nur als Abstandhalter zwischen horizontal verspannten Halteseilen und können nur unter Spannung gegenüber einer rückseitig verspannten Ladung ihre aufrechte Position einhalten.

Der Erfindung liegt das Problem zugrunde, hier eine Verbesserung zu erreichen.

Die Erfindung löst dieses Problem durch eine Ladungssicherungseinrichtung mit den Merkmalen des Anspruchs 1 sowie durch ein Transportfahrzeug mit den Merkmalen des Anspruchs 18. Weitere vorteilhafte Merkmale und Weiterbildungen der Erfindung ergeben sich aus den Ansprüchen 2 bis 17.

In der erfindungsgemäßen Ausbildung ist in Ausbildung nach Anspruch 1 eine Möglichkeit geschaffen, insbesondere rollbare und/oder leicht deformierbare Ladung heckseitig zu sichern. Durch die aufstellbaren Pfosten wird Zugkraft der Gurte in die stabilen, mit Bodenplatten versehenen Pfosten eingeleitet, so daß die Belastung der Container verringert ist. Zudem ist durch die höhendefinierten Halterungen für Gurte an den Pfosten sichergestellt, daß die Gurte genau in den Höhen verlaufen können, in denen bei mehreren aufeinandergestapelten Containern genau die stabilen Bodenflächen stehen. Ein Herunterrutschen der Gurte ist durch die Halterungen dabei verhindert. Die Kraft muß daher nicht auf die wenig stabilen aufragenden Stangen der Container einwirken, sondern nur auf deren stabile Bodenflächen. Natürlich kann bei einer Lage von derartigen Containern ein Gurt genau vor deren Bodenflächen stramm gespannt sein. Ein weiter oben angebrachter Gurt könnte dann weit geringere Kraft einleiten. Natürlich ist es für eine solche Ladungssicherungseinrichtung nicht zwingend, daß die Ladung rollbar ist.

Die genannten Pfosten müssen nicht am LKW-Aufbau fixiert werden, so daß an diesem keine Umbauten vorgenommen werden müssen. Sie sind vielmehr frei von irgendwelchen Strukturen des LKW beweglich und können von einer Person getragen werden. Für die Standsicherheit der Pfosten können jeweils Bodenplatten an diesen Pfosten vorgesehen sein, mit denen die Pfosten fest verbunden sind.

Insbesondere sind an jedem Pfosten zumindest für drei unterschiedliche Höhen definierte Halterungen vorgesehen. Dies ermöglicht die Gurtanbringung in unterschiedlichen Höhen, wodurch etwa bei einem Stapel von solchen Containern die Gurte so gezogen werden können, daß sie auch bei oberen Lagen von Containern stets vor deren Bodenflächen liegen. Auch eine Leergutfahrt mit beispielsweise bis zu 14 derartiger Container übereinander kann durch Gurte in passenden Höhen gut gesichert werden.

Eine konstruktiv einfache Höhenfixierung der Gurte ist erreicht, wenn die Halterungen jeweils durch eine dem jeweiligen Pfosten zugeordnete Reling mit Querverbindungen zum jeweiligen Pfosten als Begrenzungen von Gurtkanälen gebildet sind. Damit ist auch mit wenig Aufwand eine Vielzahl von übereinander liegenden Kanälen gebildet, so daß auch bei Stapelung von Containern verschiedener Höhen - üblich gibt es diese in drei verschiedenen Höhen - stets ein passender Kanal für einen Gurtverlauf vor den Bodenflächen gefunden werden kann.

Wenn die Halterungen der beiden Pfosten höhengleich sind, können die Gurte exakt horizontal hinter der Ladung gezogen werden.

Besonders vorteilhaft sind die Halterungen an Normhöhen von mit unterseitigen Rollen ausgestatteten Rollcontainern für Pflanzen derart angepaßt, daß bei Aufeinanderstapelung von mehreren solcher Rollcontainer auf Höhe der jeweiligen Bodenfläche eines solchen Containers eine höhendefinierte Halterung für einen Gurt vorhanden ist. Etwa bei drei übereinander angeordneten Containern der genannten Art ist damit eine vollständige Sicherung mit drei parallel übereinander verlaufenden Gurten möglich. Auch weniger oder mehr Lagen lassen sich ebensogut sichern.

Ein sehr sicherer Stand der Pfosten ist erreicht, wenn diese jeweils eine eigene Bodenplatte als Standfläche aufweisen. Ein Formschluß zum LKW ist dann zur Halterung der Pfosten nicht erforderlich. Die Pfosten können auch erst am Ende des Beladevorgangs aufgestellt werden, so daß sie die Breite der Beladeöffnung nicht einschränken. Hierdurch ist eine hohe Flexibilität erreicht. Die Pfosten sind nicht Bestandteil einer größeren Transportstruktur, wie etwa eines Regals oder einer sonstigen in oder auf einem LKW plazierbaren Einrichtung, die zur Aufnahme von Ladung vorgesehen ist, sondern vor Einsatz der Gurte jeder für sich frei bewegbar. Die Pfosten werden erst zur Sicherung der bereits verstauten Ladung benötigt.

Insbesondere weist die Bodenplatte eine Kantenerstreckung von zumindest zwanzig Zentimetern in jede Horizontalrichtung auf, um eine große Standfläche zu gewährleisten. Der aufragende Pfosten kann fest mit der Bodenplatte verbunden, beispielsweise verschweißt, sein.

Besonders günstig dient dabei die Bodenplatte bei beladenem Laderaum als Aufstandsfläche für eine Rolle eines aufstehenden Rollcontainers. Damit ist durch das Gewicht der aufstehenden Container die Bodenplatte - und damit auch der jeweiligen Pfosten - zusätzlich gesichert.

Um unterschiedliche Beladungen berücksichtigen zu können, kann ein Pfosten so aufstellbar sein, daß die jeweiligen Halterungen wahlweise in Draufsicht zur Querseite des Laderaums oder nach hinten in Längsrichtung des Laderaums weisen. Diese ist abhängig davon, ob durch die Beladung ein paar Zentimeter Luft in Breitenrichtung neben der Ladung oder in Längsrichtung hinter der Ladung verbleiben.

Die Pfosten selbst können sehr dünn sein und beispielsweise aus außerhalb der höhendefinierten Halterungen in Draufsicht eine Dickenerstreckung von weniger als einem Zentimeter haben.

Insbesondere umfassen die Pfosten zur Sicherstellung der Stabilität einerseits und für eine geringe Dicke andererseits ein Winkelprofil aus mehrere Millimeter dickem Stahlblech als tragenden Körper. Dieses kann mit dem Standfuß und der Reling verschweißt sein. Der Winkel des Profils kann die Ecken der Ladung nach hinten und nach quer außen sichernd umgreifen, indem die recht wenig stabilen Stangen der Container genau in diesem Winkel stehen.

Neben den Standflächen der Pfosten können diese zusätzlich gesichert sein, indem sie bei einem außenseitig mit Planen versehenen LKW-Aufbau an einer - ohnehin vorhandenen - bodenseitigen längs verlaufenden Lochschiene in Fahrtrichtung nach vorne und unten verspannt sind. Dieses Verspannen kann unmittelbar über Gurte erfolgen, die dann in Seitenansicht schräg nach hinten oben zu den Pfosten verlaufen und dort in die Querrichtung und den rein horizontalen Verlauf umgelenkt werden.

Alternativ ist ein mittelbares Verspannen möglich, indem zusätzlich zu den Pfosten zwei weitere, seitlich des zu transportierenden Guts plazierbare Seitenstützen vorhanden sind.

Dann können die Gurte in den durch die Halterungen definierten Höhenlagen zwischen den Pfosten und den Seitenstützen horizontal verlaufen und in Fahrtrichtung vor diesen Seitenstützen nach vorne und unten abgespannt sein.

Die Seitenstützen können auch hier in einem außenseitig mit Planen versehenen LKW-Aufbau an der vorhandenen bodenseitig längs verlaufenden Lochschiene in Fahrtrichtung nach vorne und unten verspannbar sein, wobei auch hier wiederum ein Verspannen über schräg verlaufende Gurte möglich ist. Alternativ kann diese Verspannung auch erreicht werden, indem die Verspannung über zumindest eine Verstrebung der Seitenstütze gebildet ist. Diese kann dann ungefähr eine Dreieckform zeigen und dabei die Hypothenuse als Schrägverspannung nutzen, wohingegen eine horizontal liegende Kathete über mehrere Eingriffsmittel in die Lochschiene eingreift. Auch eine solche Seitenstütze weist damit eine hohe Kippsicherheit auf, die gesamten Gurtanteile können horizontal verlaufen.

In einem Kühl-LKW hingegen mit geschlossenem Aufbau kann eine Seitenstütze, die seitlich neben der Ladung angeordnet ist, in zumindest einer wandseitigen Halteschiene über dort eingreifende Hakenteile verspannbar sein. Diese Halteschienen sind je nach LKW-Hersteller in unterschiedlicher Zahl und Höhe in die Wand eingelassen. Die Seitenstütze kann darin über entsprechende Haken gegen Zug nach hinten abgesichert sein und selbst Halterungen für einen horizontalen Gurtverlauf in passender Höhe zu den Bodenbereichen der transportierten Container aufweisen.

Sowohl für feste Wandungen als auch für Planenfahrzeuge ist damit die erfindungsgemäße Sicherung nachrüstbar, ohne Umbauten am Fahrzeug vornehmen zu müssen.

Ein Transportfahrzeug, insbesondere LKW, mit einem LKW-Aufbau, etwa einem Koffer, Anhänger oder Sattelauflieger, der mit einer solchen Ladungssicherungseinrichtung versehen ist, ist komplett als Einheit handel- und benutzbar und separat beansprucht.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Ansicht von hinten eines geöffneten und mit drei Lagen von CC-Containern übereinander beladenen LKW-Aufbaus mit einer beispielhaften erfindungsgemäßen Ladungssicherungseinrichtung mit zwei in den Eckbereichen des Laderaums stehenden Pfosten und dazwischen horizontal verlaufenden Gurten,
- Fig. 2: eine schematische Ansicht von des Seite eines geöffneten und mit drei Lagen von CC-Containern übereinander beladenen LKW-Aufbaus (die Beladung ist hier nur im hinteren Bereich angedeutet) mit einer beispielhaften erfindungsgemäßen Ladungssicherungseinrichtung, die eine zusätzliche Seitenstütze an jeder Seite umfaßt, wobei der LKW-Aufbau hier einen Planenaufbau (Tautliner) ausbildet,
- Fig. 3: eine ähnliche Ansicht wie Figur 2, jedoch eines KühlLKW mit einem Festaufbau, in dessen Wandungen zumindest jeweils eine Schiene eingelassen ist, in die hier eine hängende Seitenstütze eingreift,
- Fig. 4: einen ersten Pfosten in perspektivischer Ansicht,
- Fig. 5: den Pfosten nach Figur 4 in Ansicht von der Seite,
- Fig. 6: den Pfosten nach Figur 4 in Ansicht von oben
- Fig. 7: einen zweiten Pfosten in perspektivischer Ansicht,
- Fig. 8: den Pfosten nach Figur 7 in Ansicht von der Seite,
- Fig. 9: den Pfosten nach Figur 7 in Ansicht von oben
- Fig. 10: eine seitliche Stütze zum Eingriff in eine untere Lochschiene in Seitenansicht,
- Fig. 11: die Stütze nach Figur 10 in stirnseitiger Ansicht,
- Fig. 12: eine seitliche Stütze zum hängenden Eingriff in eine Wandschiene eine Kühlaufbaus in Seitenansicht.

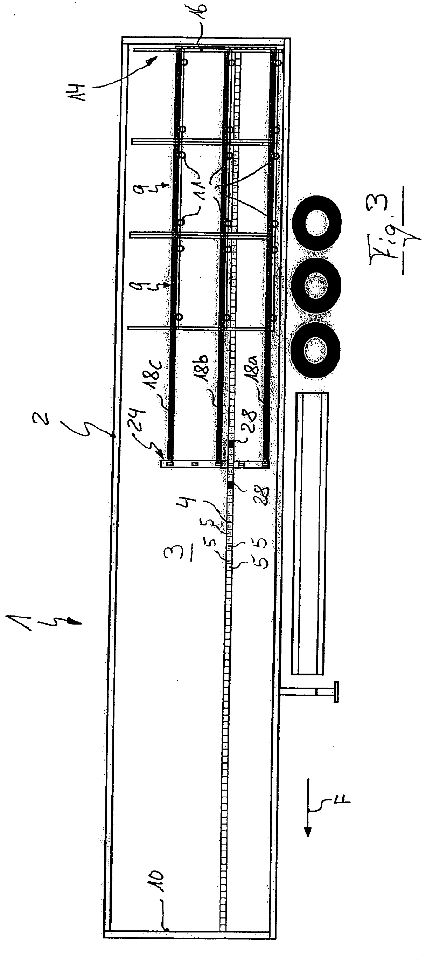

Ein erfindungsgemäßes Transportfahrzeug, hier ein LKW 1, kann beispielsweise wie in Figur 3 einen geschlossenen Aufbau 2 mit starren Seitenwandungen 3 und mit einer oder mehreren in diese Seitenwandungen 3 eingelassenen Schienen 4 mit einer Vielzahl von Einhängöffnungen 5 haben. Hier ist beispielhaft ein Sattelauflieger dargestellt. Auch Koffer eines Zugfahrzeugs oder Anhänger können in dieser Weise ausgebildet sein.

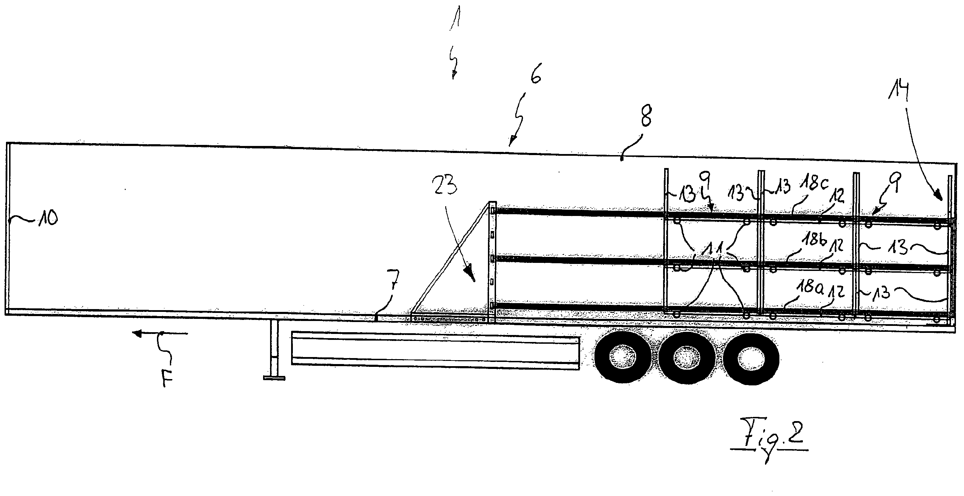

Alternativ ist in Figur 2 ein Sattelauflieger als Planenaufbau 6 dargestellt, bei dem üblicherweise längs verlaufende, seitliche Lochschienen 7 fest am Boden anmontiert sind. Die Planen 8 sind dabei über Rungen gehalten, die selbst keine hinreichende Stabilität für Gurtabspannungen aufweisen und daher nicht als Gurthalterungen genutzt werden dürfen.

Hier sind als Ladung beispielhaft drei Lagen von rollbaren CC-Containern 9 übereinander gestapelt, die hier für eine erleichterte Übersicht nur im hinteren Bereich eingezeichnet sind, jedoch üblicherweise von der vorderen Stirnwand 10 her angefangen durchgehend geladen werden. Diese Container 9 weisen jeweils unterseitige Rollen 11 auf, die an einer stabilen Bodenfläche 12 nach unten hin weisend anmontiert sind. Von der Bodenfläche 12 erstrecken sich in den Ecken nach oben weisende Rahmenteile 13, die als einseitig abgestützte Stangen nur eine geringe Stabilität aufweisen. Derartige Container sind häufig in nach oben offener Beladung mit Pflanzen bestückt. Auch nur eine einzige Lage solcher CC- oder EC-Container ist beispielsweise möglich. Leergutfahrten mit eingeklappten Stangen, so daß bis zu 14 Lagen solcher Container übereinander passen, sind ebenfalls möglich.

Aufgrund der geringen Stabilität der aufragenden Stangen ist eine horizontal Kraft einleitende Abstützung derartiger Container 9 nur im Bereich ihrer Bodenflächen 12 gefahrlos möglich.

Hier ist daher eine Ladungssicherungseinrichtung 14 vorgesehen, die zumindest zwei mobile, jeder für sich tragbare und im Laderaum eines LKW aufstellbare Pfosten 15, 16 mit höhendefinierten Halterungen 17a, 17b ... für Gurte 18a, 18b, 18c umfaßt. Hier sind beispielhaft für drei Lagen von Containern 9 übereinander drei Gurte 18a, 18b, 18c übereinander vorgesehen. Wie gesagt, sind auch andere Stapelungshöhen möglich.

Diese Gurte 18a, 18b, 18c können in unterschiedlichen definierten Höhen an den im Laderaum aufgestellten Pfosten 15, 16 gesichert sein, ohne Gefahr zu laufen, nach oben oder unten nennenswert abrutschen zu können.

Wie hier sichtbar ist, sind an jedem Pfosten 15, 16 zumindest für drei unterschiedliche höhendefinierte Halterungen 17a, 17b, 17c für die Gurte 18a, 18b, 18c vorgesehen. Da es derartige CC-Container in verschiedenen Höhenausführungen gibt, ist es besonders günstig, wie hier dargestellt, wenn weitere höhendefinierte Halterungen 17d, 17e, 17f, ... vorgesehen sind, um so Gurte 18a, 18b, 18c in nahezu jeder geeigneten Höhe, also direkt auf Höhe eines Bodenbereichs 12, halten zu können. In jedem Fall ist es günstig, wenn die Halterungen 17a, 17b, ... an Normhöhen von mit unterseitigen Rollen 11 ausgestatteten Rollcontainern 9 für Pflanzen derart angepaßt sind, daß bei Aufeinanderstapelung von mehreren solcher Rollcontainer 9 auf Höhe der jeweiligen Bodenfläche 12 eines solchen Containers eine höhendefinierte Halterung für einen Gurt vorhanden ist.

Durch die erhebliche Gurtbreite kann allein durch diese ein Toleranzausgleich von wenigen Zentimetern möglich sein.

Gemäß der Zeichnung sind die Halterungen 17a, 17b, 17c, 17d, ... jeweils durch eine dem jeweiligen Pfosten 15, 16 zugeordnete Reling R mit Querverbindungen Q zum jeweiligen Pfosten als Begrenzungen von Gurtkanälen 17a, 17b, .... gebildet. Die Querverbinder Q benötigen nur soviel Länge, um damit einen Abstand zur Reling R zu definieren, der groß genug ist, um Gurte 18a, 18b, 18c durchfädeln zu können.

Dabei sind die Halterungen 17a, 17b, ... der beiden Pfosten 15, 16 höhengleich, so daß die Gurte 18a, 18b, 18c heckseitig der Ladung vollständig horizontal laufen können.

Jeder der Pfosten 15, 16 ist frei im Laderaum aufstellbar und weist zur Verbesserung seiner Standsicherheit eine Bodenplatte 19, 20 als Standfläche auf. Am LKW sind daher keinerlei Umbauten für die Installation der Ladungssicherungseinrichtung 14 erforderlich, was einen enormen Vorteil darstellt. Auch können je nach Ladegut die Pfosten 15, 16 mitgeführt oder zu Hause gelassen werden. Die Pfosten 15, 16 sind nicht Bestandteil einer sonstigen Tragestruktur, sondern zunächst frei beweglich und erst durch die eingezogenen Gurte in ihrer Lage fest.

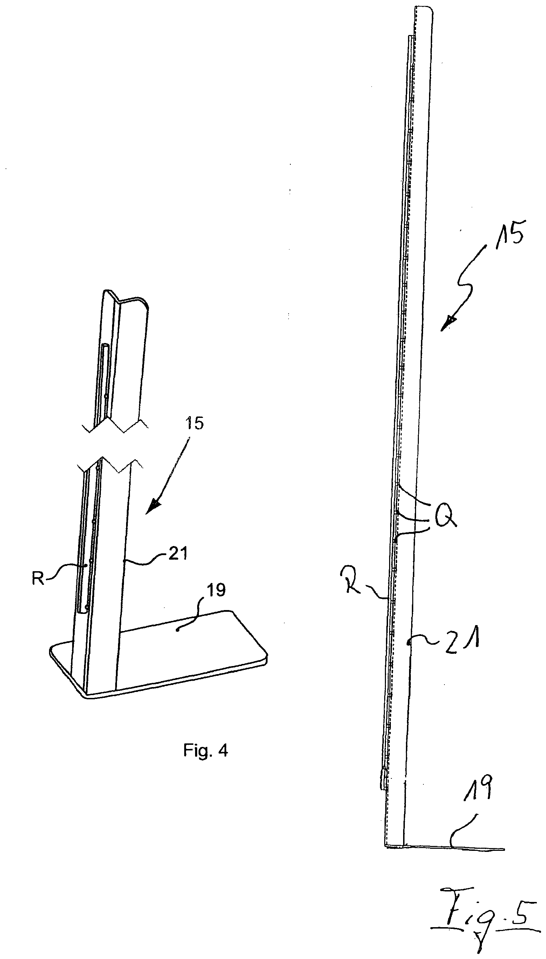

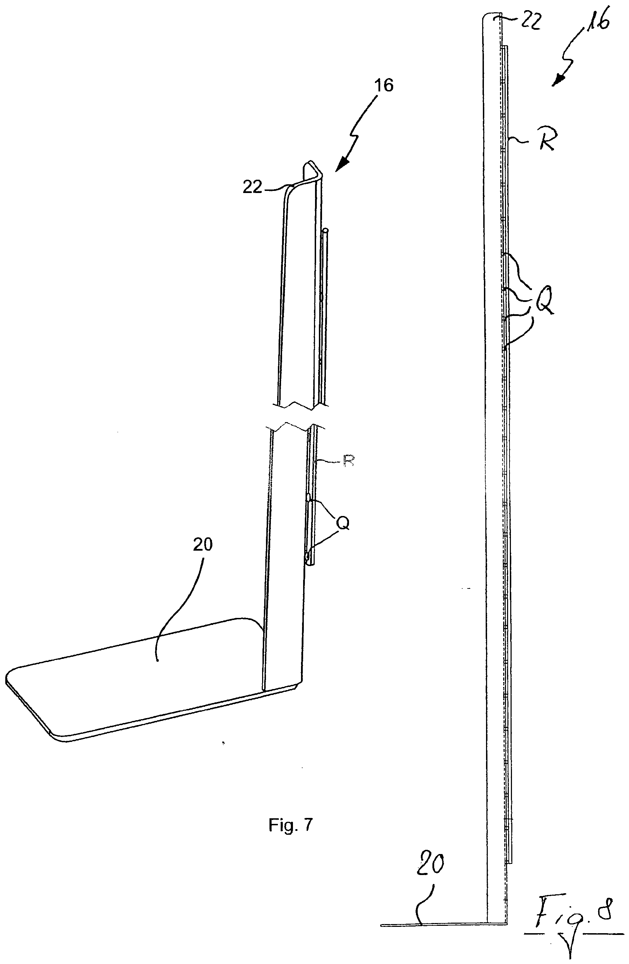

Die Bodenplatte 19, 20 weist insbesondere eine Kantenerstreckung von zumindest zwanzig Zentimetern in jede Horizontalrichtung auf und kann gleichzeitig bei beladenem Laderaum als Aufstandsfläche für eine Rolle 11 eines aufstehenden Rollcontainers 9 dienen. Damit ist eine besonders hohe Standfestigkeit für die Pfosten 15, 16 erreicht. Diese brauchen insbesondere keine Verschraubung oder andere formschlüssige Verbindung zum LKW-Aufbau 2, 6. In den Figuren 4 und 7 sind Pfosten 15, 16 mit Bodenplatten 19, 20 dargestellt. Die Bodenplatten 19, 20 können insbesondere in Aufstellage eine größere Längs- als Quererstreckung aufweisen und so bis unter die erste Rolle 11 eines Rollcontainers 9 reichen. Die Bodenplatten 19, 20 können dafür ungefähr Din-A-4-Format aufweisen.

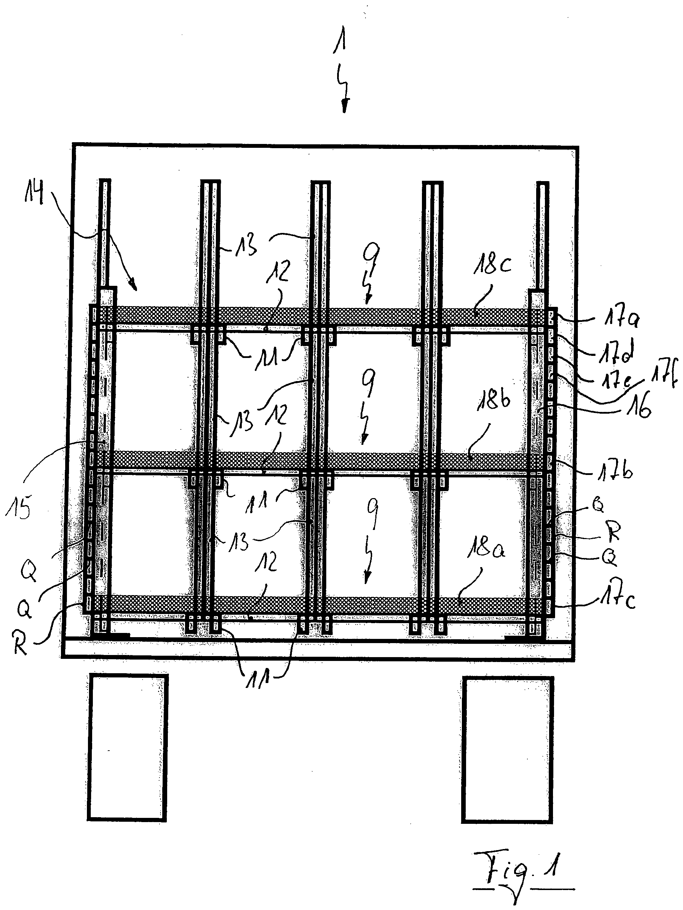

Die Pfosten 15, 16 können unterschiedlich ausgebildet und unterschiedlich aufstellbar sein: Wie in Figur 1 verdeutlicht ist, kann die Reling R bei hinreichend verbleibendem Platz (ca. 5 bis 10 Zentimeter zu jeder Seite nach seitlich quer außen weisen. In Figur 2 und 3 zeigt hingegen die Reling R nach hinten, da dort kein Platz zur Seite zur Verfügung stand. Da die Bodenplatte 19, 20 in beiden Fällen in Fahrzeuglängsrichtung weisen soll, kann ein Sortiment von unterschiedlichen Pfosten 15, 16 für verschiedene Fahrzeuge und/oder Beladungsarten zur Verfügung gestellt werden.

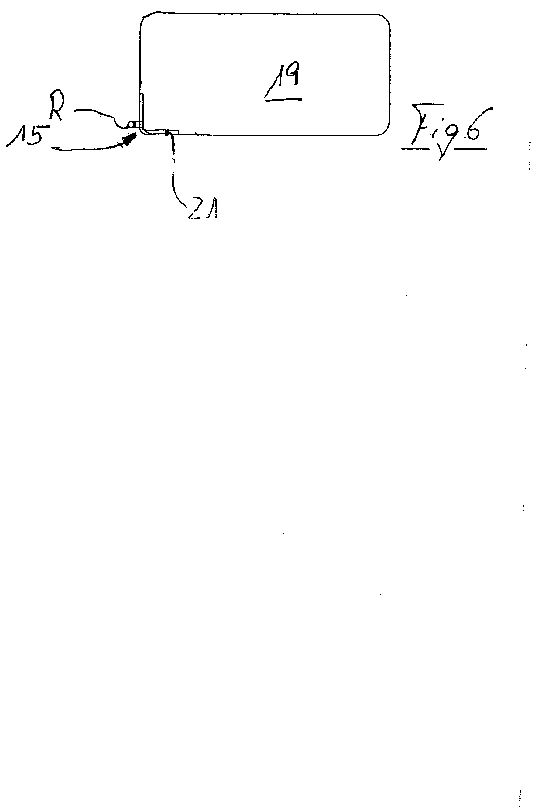

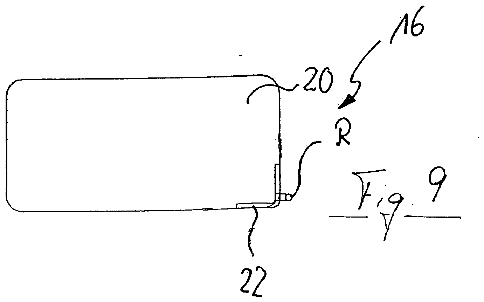

Wie etwa in den Figuren 4 bis 9 deutlich wird, weisen die Pfosten 15, 16 außerhalb der höhendefinierten Halterungen 17a, 17b, ... in Draufsicht eine Dickenerstreckung von weniger als einem Zentimeter auf. Insbesondere umfassen die Pfosten 15, 16 jeweils ein Winkelprofil 21, 22 als tragenden Körper, wobei das Winkelprofil 21, 22 mit dem Standfuß 19 bzw. 20 und der Reling R verschweißt ist. Das Winkelprofil 21, 22 kann eine Wandstärke von nur wenigen (zum Beispiel vier bis sieben) Millimetern aufweisen und benötigt so selbst nur minimalen Raum neben und/oder hinter der Ladung.

Wie oben bereits angedeutet, können die Pfosten 15, 16 in einem außenseitig mit Planen 8 versehenen LKW-Aufbau 6 an einer bodenseitigen längs verlaufenden Lochschiene 7 in Fahrtrichtung F nach vorne und unten verspannt sein. Diese Verspannung kann zum Beispiel über in Seitenansicht schräg verlaufende und in der Lochschiene 7 eingehakte Gurte 18a, 18b, 18c erfolgen.

Weiter ist es möglich, daß zusätzlich zu den Pfosten 15, 16 zwei weitere, seitlich des zu transportierenden Guts plazierbare Seitenstützen 23 bzw. 24 vorhanden sind. Dann können die Gurte 18a, 18b, 18c in den durch die Halterungen 17a, 17b, 17c, ... definierten Höhen zwischen den Pfosten 15, 16 und den Seitenstützen 23 bzw. 24 horizontal verlaufen und die Ladung auch gegen eine seitliche Bewegung sichern.

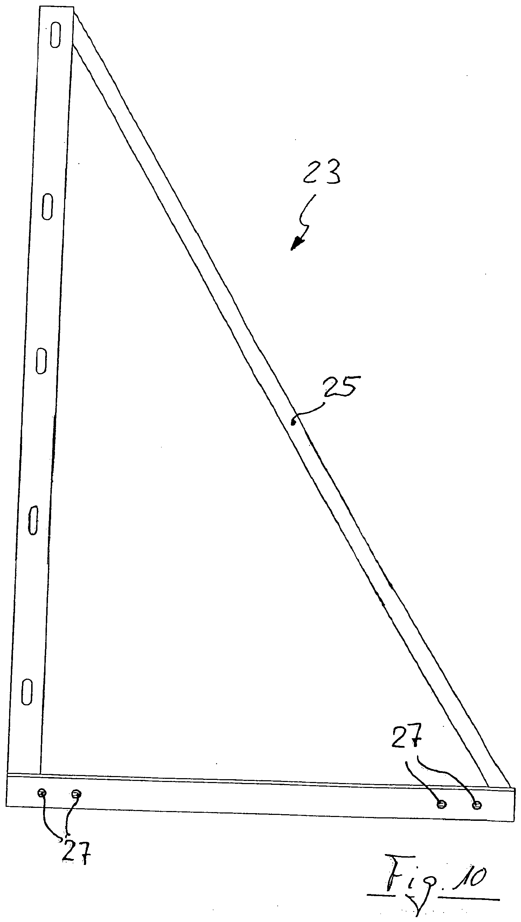

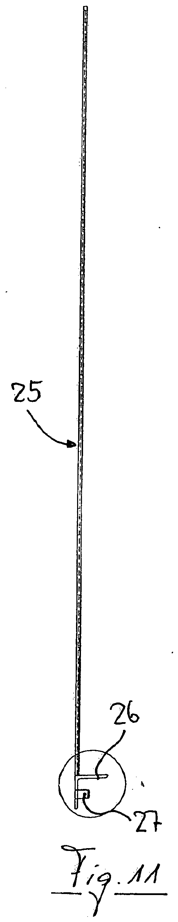

In Figur 2 ist eine solche Seitenstütze 23 für einen Tautliner (Planenaufbau 6) eingezeichnet: die Seitenstütze 23 kann entweder über schräg abwärts führende Gurte oder - wie hier - über eine feste Verstrebung 25 der Seitenstütze 23 an einer bodenseitigen, längs verlaufenden Lochschiene 7 in Fahrtrichtung F nach vorne und unten verspannbar sein (sh. Figuren 10 und 11). Die Seitenstützen 23 (die pro Fahrzeugquerseite achssymmetrisch zueinander ausgebildet sind) weisen jeweils einen horizontalen Auflageflansch 26 zum Aufliegen auf der Lochschiene 7 auf. Zudem sind für eine gute Lastverteilung mindestens vier bis fünf Eingriffs- oder Durchgriffsmittel 27 in die Lochungen der Lochschiene 7 vorgesehen. Die fest verschweißte Verstrebung 25 bildet hier die Hypothenuse des rechtwinkligen Dreiecks der Seitenstütze aus. Anstelle der festen Verstrebung 25 könnte hier auch eine Abspannung durch einen oder mehrere Gurte nach schräg unten erfolgen. Auch diese Seitenstützen 25 brauchen oberhalb der Lochschiene 7 nur sehr wenig Raum mit einer Dicke von wenigen Millimetern. Mehr als die Dicke eines Stahlblechs ist hier nicht erforderlich.

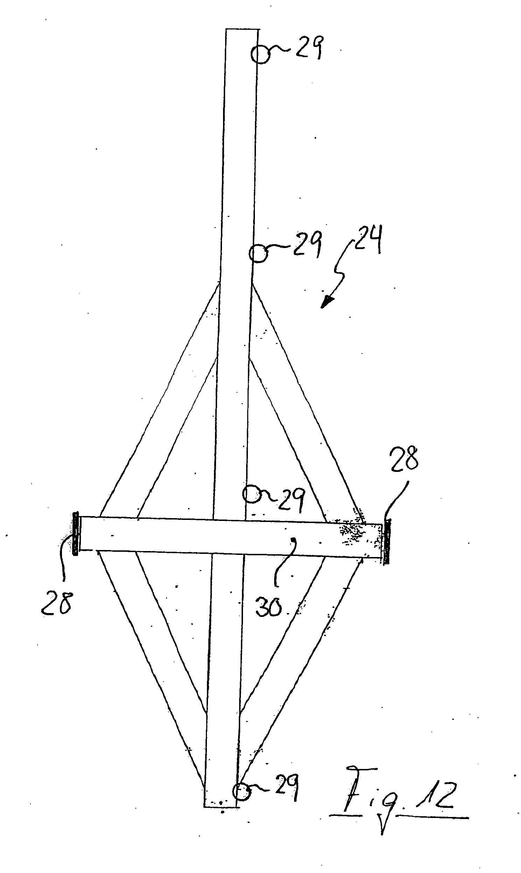

In den Figuren 3 und 12 sind alternativ Seitenstützen 24 in einem Kühl-LKW mit geschlossenem Festaufbau 2 dargestellt: Auch hier weisen die Seitenstützen 24 (wie oben die Seitenstützen 23 für einen Planen-Aufbau 6) mehrere Gurthalterungen 29 übereinander auf, so daß von dort bis zu den hinteren Pfosten 15, 16 die Gurte 18a, 18b, 18c vollständig horizontal laufen können.

Zudem ist die Seitenstütze 24 hier über Hakenteile 28 an zumindest einer wandseitigen Halteschiene 4 über dort die eingreifenden Hakenteile 28 halterbar. Diese Seitenstützen 24 können je nach Höhe der Halteschiene 4 dabei schwebend gehalten sein, benötigen selbst also keinen Bodenkontakt. Zahl und Höhe derartiger Seitenschienen 4 variieren von Fahrzeug zu Fahrzeug. Es kann auch hier eine Vielzahl von Befestigungen 29 für Gurte an der Seitenstütze 24 vorgesehen sein. Damit läßt sich in allen Fahrzeugen dieser Art eine geeignete Höhe für die Anbringung von Gurten 18a, 18b, 18c finden, so daß diese zumindest nahezu horizontal zu den hinteren Pfosten 15, 16 laufen und zwischen diesen die CC-Container in Höhe ihrer Bodenbereiche 12 quer hintergreifen können. Die Hakenteile 28 können an einer Querverstrebung 30 der zum Beispiel damit kreuzförmigen Seitenstütze 24 gehalten sein.

## Patentansprüche

1. Ladungssicherungseinrichtung (14) für Laderäume von Transportfahrzeugen, insbesondere von LKW (1), wobei die Ladungssicherungseinrichtung (14) zwei mobile, im Laderaum eines LKW aufstellbare Pfosten (15; 16) mit höhendefinierten Halterungen (17a;17b;17c;17d,...)für Gurte (18a;18b;18c) umfaßt, wobei die Pfosten frei von irgendwelchen Strukturen eines LKW beweglich sind, nicht am LKW-Aufbau fixiert werden müssen und von einer Person getragen werden können, **dadurch gekennzeichnet, dass** die Pfosten (15;16) jeweils eine Bodenplatte (19;20) als Standfläche aufweisen.

2. Ladungssicherungseinrichtung (14) nach Anspruch 1, **dadurch gekennzeichnet, daß** an jedem Pfosten (15; 16) zumindest für drei unterschiedliche Höhen definierte Halterungen (17a;17b;17c) vorgesehen sind.

3. Ladungssicherungseinrichtung (14) nach einem der Ansprüche 1 oder 2,
**dadurch gekennzeichnet,**
**daß** die Halterungen (17a;17b;17c,/ld;17e;...) jeweils durch eine dem jeweiligen Pfosten (15;16) zugeordnete Reling (R) mit Querverbindungen (Q) zum jeweiligen Pfosten (15;16) als Begrenzungen von Gurtkanälen gebildet sind.

4. Ladungssicherungseinrichtung (14) nach einem der Ansprüche 1 bis 3,
**dadurch gekennzeichnet,**
**daß** die Halterungen (17a;17b;17c;17d,...) der beiden Pfosten (15; 16) höhengleich sind.

5. Ladungssicherungseinrichtung (14) nach einem der Ansprüche 1 bis 4,
**dadurch gekennzeichnet,**
**daß** die Halterungen (17a;17b;17c,...) an Normhöhen von mit unterseitigen Rollen (11) ausgestatteten Rollcontainern (9) für Pflanzen derart angepaßt sind, daß bei Aufeinanderstapelung von mehreren solcher Rollcontainer (9) auf Höhe der jeweiligen Bodenfläche (12) eines solchen Containers (9) eine höhendefinierte Halterung (17a;17b;17c,...) für einen Gurt (18a;18b;18c) vorhanden ist.

6. Ladungssicherungseinrichtung (14) nach einem der Ansprüche 1 bis 5,
**dadurch gekennzeichnet,**
**daß** die Bodenplatte (19;20) eine Kantenerstreckung von zumindest zwanzig Zentimetern in jede Horizontalrichtung aufweist.

7. Ladungssicherungseinrichtung (14) nach einem der Ansprüche 1 bis 6,
**dadurch gekennzeichnet,**
**daß** die Bodenplatte (19;20) bei beladenem Laderaum als Aufstandsfläche für eine Rolle (11) eines aufstehenden Rollcontainers (9) dient.

8. Ladungssicherungseinrichtung (14) nach einem der Ansprüche 1 bis 7,
**dadurch gekennzeichnet,**
**daß** jeder Pfosten (15;16) so aufstellbar ist, daß die jeweiligen Halterungen (17a;17b;17c,...) wahlweise in Draufsicht zur Querseite des Laderaums oder nach hinten in Längsrichtung des Laderaums weisen.

9. Ladungssicherungseinrichtung (14) nach einem der Ansprüche 1 bis 8,
**dadurch gekennzeichnet,**
**daß** die Pfosten (15;16) außerhalb der höhendefinierten Halterungen (17a;17b;17c,...) in Draufsicht eine Dickenerstreckung von weniger als einem Zentimeter haben.

10. Ladungssicherungseinrichtung (14) nach einem der Ansprüche 1 bis 9,
**dadurch gekennzeichnet,**
**daß** die Pfosten (15;16) ein Winkelprofil (21;22) als tragenden Körper umfassen.

11. Ladungssicherungseinrichtung (14) nach Anspruch 10,
**dadurch gekennzeichnet,**
**daß** das Winkelprofil (21;22) mit dem Standfuß (19;20) und der Reling (R) verschweißt ist.

12. Ladungssicherungseinrichtung (14) nach einem der Ansprüche 1 bis 11,
**dadurch gekennzeichnet,**
**daß** die Pfosten (15;16) jeder für sich tragbar und ohne feste Verbindung zu einer Fahrzeugstruktur oder einer anderen Transportstruktur im Laderaum aufstellbar sind.

13. Ladungssicherungseinrichtung (14) nach einem der Ansprüche 1 bis 12,
**dadurch gekennzeichnet,**
**daß** zusätzlich zu den Pfosten (15; 16) zwei weitere, seitlich des zu transportierenden Guts plazierbare Seitenstützen (23;24) vorhanden sind.

14. Ladungssicherungseinrichtung (14) nach Anspruch 13,
**dadurch gekennzeichnet,**
**daß** die Gurte (18a;18b;18c) in den durch die Halterungen (17a;17b;17c,...) definierten Höhen zwischen den Pfosten (15;16) und den Seitenstützen (23;24) horizontal verlaufen.

15. Ladungssicherungseinrichtung (14) nach einem der Ansprüche 13 oder 14,
**dadurch gekennzeichnet,**
**daß** die Seitenstützen (23) in einem außenseitig mit Planen (8) versehenen LKW-Aufbau (6) an einer bodenseitigen längs verlaufenden Lochschiene (7) in Fahrtrichtung (F) nach vorne und unten verspannbar sind.

16. Ladungssicherungseinrichtung (14) nach Anspruch 15,
**dadurch gekennzeichnet,**
**daß** die Verspannung über zumindest eine Verstrebung (25) der Seitenstütze (23) gebildet ist.

17. Ladungssicherungseinrichtung (14) nach einem der Ansprüche 13 oder 14,
**dadurch gekennzeichnet,**
**daß** die Seitenstützen (24) in einem Kühl-LKW mit geschlossenem Aufbau (2) an zumindest einer wandseitigen Halteschiene (5) über dort eingreifende Hakenteile (29) verspannbar sind.

18. Transportfahrzeug, insbesondere LKW (1), mit einem LKW-Aufbau (2;6), etwa einem Koffer, Anhänger oder Sattelauflieger, und mit einer Ladungssicherungseinrichtung (14) nach einem der Ansprüche 1 bis 17.

## Claims

1. Load-restraint assembly (14) for load compartments of transport vehicles, in particular of trucks (1), wherein
the load-restraint assembly (14) comprises two mobile posts (15; 16), which can be erected in the load compartment of a truck, and have height-defined holding points (17a; 17b; 17c; 17d, ...) for straps (18a; 18b; 18c), wherein the posts can be moved independently of any structures of a truck, do not need to be fixed to the truck body, and can be carried by one person,
**characterised in that,**
the posts (15; 16) each have a base plate (19; 20) as a support surface.

2. Load-restraint assembly (14) according to Claim 1, **characterised in that,**
holding points (17a; 17b; 17c), defined for at least three different heights, are provided on each post (15; 16).

3. Load-restraint assembly (14) according to one of the Claims 1 or 2,
**characterised in that,**
the holding points (17a; 17b; 17c; 17d; 17e, ...) are in each case formed by a rail (R) assigned to the respective post (15; 16), and are formed as restrictions of strap channels, with transverse connections (Q) to the respective post (15; 16).

4. Load-restraint assembly (14) according to one of the Claims 1 to 3,
**characterised in that,**
the holding points (17a; 17b; 17c; 17d, ...) of the two posts (15; 16) are at the same heights.

5. Load-restraint assembly (14) according to one of the Claims 1 to 4,
**characterised in that,**
the holding points (17a; 17b; 17c, ...) are matched to standard heights of roller containers (9) for plants, fitted with rollers (11) on the underside such that, when a plurality of such roller containers (9) are stacked one on top of another, a height-defined holding point (17a; 17b; 17c, ...) for a strap (18a; 18b; 18c) is present at the height of the respective floor surface (12) of such a container (9).

6. Load-restraint assembly (14) according to one of the Claims 1 to 5,
**characterised in that,**
the base plate (19; 20) has an edge extent of at least twenty centimetres in each horizontal direction.

7. Load-restraint assembly (14) according to one of the Claims 1 to 6,
**characterised in that,**
the base plate (19; 20) serves as a support surface for a roller (11) of a roller container (9) standing on the latter, when the load compartment is loaded.

8. Load-restraint assembly (14) according to one of the Claims 1 to 7,
**characterised in that,**
each post (15; 16) can be erected such that, in plan view, the respective holding points (17a; 17b; 17c, ...) face either towards the transverse side of the load compartment, or towards the rear in the longitudinal direction of the load compartment.

9. Load-restraint assembly (14) according to one of the Claims 1 to 8,
**characterised in that,**
**characterised in that,**
in plan view the posts (15; 16), outside the height-defined holding points (17a; 17b; 17c, ...), have a thickness extent of less than one centimetre.

10. Load-restraint assembly (14) according to one of the Claims 1 to 9,
**characterised in that,**
the posts (15; 16) comprise an angle profile (21; 22) as a supporting body.

11. Load-restraint assembly (14) according to Claim 10,
**characterised in that,**
the angle profile (21; 22) is welded to the foot (19; 20) and the rail (R).

12. Load-restraint assembly (14) according to one of the Claims 1 to 11,
**characterised in that,**
the posts (15; 16) are in each case portable, and can be erected in the load compartment without a fixed connection to a vehicle structure, or to another transport structure.

13. Load-restraint assembly (14) according to one of the Claims 1 to 12,
**characterised in that,**
in addition to the posts (15; 16), there are two further side supports (23; 24) that can be positioned to the side of the goods to be transported.

14. Load-restraint assembly (14) according to Claim 13,
**characterised in that,**
the straps (18a; 18b; 18c) run horizontally between the posts (15; 16) and the side supports (23; 24), at the heights defined by the holding points (17a; 17b; 17c, ...).

15. Load-restraint assembly (14) according to one of the Claims 13 or 14,
**characterised in that,**
in a truck body (6) provided on the outside with tarpaulins (8), the side supports (23) can be braced forwards and downwards in the direction of travel (F) on a perforated rail (7) extending longitudinally along the floor.

16. Load-restraint assembly (14) according to Claim 15,
**characterised in that,**
the bracing is formed by way of at least one strut (25) of the side support (23).

17. Load-restraint assembly (14) according to one of the Claims 13 or 14,
**characterised in that,**
the side supports (24) in a refrigerated truck with a closed body (2) can be braced on at least one retaining rail (5) on the wall side, by way of hook parts (29) engaging with the latter.

18. Transport vehicle, in particular a truck (1), with a truck body (2; 6), such as a box, a trailer, or a semi-trailer, and with a load-restraint assembly (14) according to one of the Claims 1 to 17.

## Revendications

1. Dispositif de sécurisation de charge (14) pour des espaces de chargement de véhicules de transport, notamment de camions (1),
le dispositif de sécurisation de charge (14) comprenant deux poteaux (15 ; 16) mobiles, susceptibles d'être dressés dans l'espace de chargement d'un camion, pourvus d'attaches (17a ; 17b ; 17c ; 17d ; ...) pour des sangles (18a ; 18b ; 18c), les poteaux étant mobiles librement de quelconques structures d'un camion, ne devant pas être fixés sur le châssis de véhicule et pouvant être portés par une personne,
**caractérisé en ce que**
les poteaux (15 ; 16) comportent chacun une plaque d'embase (19 ; 20) en tant que surface de pose.

2. Dispositif de sécurisation de charge (14) selon la revendication 1,
**caractérisé en ce que**
sur chaque poteau (15 ; 16) sont prévues des attaches (17a ; 17b ; 17c) définies pour au moins trois différentes hauteurs.

3. Dispositif de sécurisation de charge (14) selon l'une quelconque des revendications 1 ou 2,
**caractérisé en ce que**
les attaches (17a ; 17b ; 17c ; 17d ; 17e ; ...) sont formées chacune par une rambarde (R) associée au poteau (15 ; 16) respectif, pourvue de liaisons transversales (Q) vers le poteau (15 ; 16) respectif en tant que délimitations de conduits de sangle.

4. Dispositif de sécurisation de charge (14) selon l'une quelconque des revendications 1 à 3,
**caractérisé en ce que**
les attaches (17a ; 17b ; 17c ; 17d, ...) des deux poteaux (15 ; 16) sont de hauteur identique.

5. Dispositif de sécurisation de charge (14) selon l'une quelconque des revendications 1 à 4,
**caractérisé en ce que**
les attaches (17a ; 17b ; 17c, ...) sont adaptées à des hauteurs standard de conteneurs roulants (9) pour plantes équipés de roulettes (11) sur leur face inférieure, de telle sorte que lors de l'empilage de plusieurs conteneurs roulants (9) de ce type, une attache (17a ; 17b ; 17c, ...) définie en hauteur pour une sangle (18a ; 18b ; 18c) soit présente à hauteur de la surface de fond inférieur (12) respective d'un conteneur (9) de ce type.

6. Dispositif de sécurisation de charge (14) selon l'une quelconque des revendications 1 à 5,
**caractérisé en ce que**
la plaque d'embase (19 ; 20) présente une extension des arêtes d'au moins vingt centimètres dans chaque direction horizontale.

7. Dispositif de sécurisation de charge (14) selon l'une quelconque des revendications 1 à 6,
**caractérisé en ce que**
lorsque l'espace de chargement est chargé, la plaque d'embase (19 ; 20) fait office de surface de pose pour une roulette (11) d'un conteneur roulant (9) placé dessus.

8. Dispositif de sécurisation de charge (14) selon l'une quelconque des revendications 1 à 7,
**caractérisé en ce que**
chaque poteau (15 ; 16) peut être dressé de telle sorte que, vues en élévation, les attaches (17a ; 17b ; 17c, ...) respectives soient dirigées sélectivement vers le côté transversal de l'espace de chargement ou vers l'arrière, dans la direction longitudinale de l'espace de chargement.

9. Dispositif de sécurisation de charge (14) selon l'une quelconque des revendications 1 à 8,
**caractérisé en ce que**
vus en élévation, à l'extérieur des attaches (17a ; 17b ; 17c, ...) définissant la hauteur, les poteaux (15 ; 16) ont une extension dans l'épaisseur est inférieure à un centimètre.

10. Dispositif de sécurisation de charge (14) selon l'une quelconque des revendications 1 à 9,
**caractérisé en ce que**
les poteaux (15 ; 16) comprennent une cornière (21 ; 22) en tant que corps porteur.

11. Dispositif de sécurisation de charge (14) selon la revendication 10,
**caractérisé en ce que**
la cornière (21 : 22) est soudée avec le pied d'appui (19 ; 20) et avec la rambarde (R).

12. Dispositif de sécurisation de charge (14) selon l'une quelconque des revendications 1 à 11,
**caractérisé en ce que**
les poteaux (15 ; 16) peuvent être dressés dans l'espace de chargement en étant autoportants chacun pour soi et sans liaison fixe avec une structure du véhicule ou une autre structure de transport.

13. Dispositif de sécurisation de charge (14) selon l'une quelconque des revendications 1 à 12,
**caractérisé**
**en ce qu'**additionnellement aux poteaux (15 ; 16), deux supports latéraux (23 ; 24) supplémentaires, aptes à être placés latéralement du produit à transporter sont présents.

14. Dispositif de sécurisation de charge (14) selon la revendication 13,
**caractérisé en ce que**
les sangles (18a ; 18b ; 18c) s'écoulent à l'horizontale dans les hauteurs définies par les attaches (17a ; 17b ; 17c, ...), entre les poteaux (15 ; 16) et les supports latéraux (23 ; 24) .

15. Dispositif de sécurisation de charge (14) selon l'une quelconque des revendications 13 ou 14,
**caractérisé en ce que**
sur un châssis de camion (6) muni de bâches (8) sur l'extérieur, les supports latéraux (23) sont aptes à être contraints vers l'avant et vers le bas sur un rail perforé (7) s'étendant longitudinalement sur le fond inférieur dans la direction de déplacement (F).

16. Dispositif de sécurisation de charge (14) selon la revendication 15,
**caractérisé en ce que**
la contrainte est créée par l'intermédiaire d'au moins une entretoise (25) du support latéral (23).

17. Dispositif de sécurisation de charge (14) selon l'une quelconque des revendications 13 ou 14,
**caractérisé en ce que**
dans un camion frigorifique à châssis fermé (2), les supports latéraux (24) sont aptes à être contraints sur au moins un rail de maintien (5) placé sur la paroi, par l'intermédiaire de pièces en crochets (29) qui s'y engagent.

18. Véhicule de transport, notamment camion (1), pourvu d'un châssis de camion (2 ; 6), par exemple d'un coffre, d'une remorque ou d'une semi-remorque et pourvu d'un dispositif de sécurisation de charge (14) selon l'une quelconque des revendications 1 à 17.
